# EUROPEAN PATENT APPLICATION

(11) **EP 2 853 711 A1**
(43) Date of publication of application: **01.04.2015**
(21) Application number: 14186872.9
(22) Date of filing: 29.09.2014
(51) Int. Cl.: F01P 7/16

(54) **Coolant circuit for a hybrid vehicle**

(30) Priority: 30.09.2013 GB 201317250
(71) Applicant: McLaren Automotive Limited, Woking Surrey GU 21 4YH (GB)
(72) Inventor: Lacey, Simon, Woking, Surrey GU21 4YH (GB); Hopkirk, Richard, Woking, Surrey GU21 4YH (GB)
(74) Representative: Slingsby Partners LLP

(57) **Abstract**

Temperature regulation apparatus for a hybrid vehicle having a forced induction combustion engine and an electric drive motor, the apparatus comprising: a temperature regulating circuit carrying a fluid coolant; a heat exchanger for cooling the coolant; and a first coolant pump for circulating the coolant around the temperature regulating circuit; the temperature regulating circuit having: a first branch serving a charge air cooler of a forced induction combustion engine; and a second branch serving one or more electric drive components and including a second coolant pump for regulating the flow of the coolant through the one or more electric drive components; wherein the first and second branches of the temperature regulating circuit are arranged in parallel and the first coolant pump is arranged between the heat exchanger and the first and second branches of the temperature regulating circuit so as to be operable to circulate coolant from each of the first and second branches of the temperature regulating circuit through the heat exchanger.

## Description

### BACKGROUND OF THE INVENTION

This invention relates to temperature regulation apparatus for electric and hybrid vehicles.

Internal combustion engines develop a significant amount of heat and are typically air or liquid cooled by a cooling circuit designed to dissipate high temperatures. Electrical components such as motors, DC-DC converters and batteries, can also develop heat during use but typically operate at lower temperatures than a combustion engine and are normally therefore provided with a separate low temperature cooling circuit. The heat generated in electric drive systems is a particular problem in high performance hybrid cars having high output electric motors and high power density batteries.

Because separate cooling systems are conventionally provided for the engine and electric drive of hybrid vehicles, weight and complexity can become a significant issue. Some efforts have been made to combine aspects of the high and low temperature cooling circuits of hybrid vehicles, such as the cooling system described in WO 2008/087342, which relates to a cooling circuit having low temperature and high temperature parts which can be decoupled from one another in certain vehicle modes. However, the additional components and control systems required to manage the combined high and low temperature cooling systems mean the resulting system does not in many ways significantly improve on more conventional designs.

WO 2011/050892 and US 2007/0137909 also relate to a hybrid cooling circuit that provides cooling circuit to parts of a combustion engine and teach that it can be advantageous to include charge air cooler on a hybrid cooling circuit. However, the former cooling system suffers from complex control systems and multiple coolant loops, and the latter does not provide independent control of cooling for the charge air cooler and hybrid components.

Furthermore, vehicles equipped with conventional cooling circuits can benefit from being equipped with additional mechanisms for warming sensitive components of a hybrid drive, such as lithium ion batteries. Components which only operate effectively above a minimum temperature are generally provided with additional active heating elements as described in Cooling and Preheating of Batteries in Hybrid Electric Vehicles, A. Pesaran et al., 6th ASME-JSME Thermal Engineering Joint Conference, March 16-20 2003. This again increases the weight and complexity of hybrid vehicles.

There is therefore a need for a system for improved temperature regulation apparatus for hybrid vehicles.

### SUMMARY OF THE INVENTION

According to a first aspect of the present invention there is provided temperature regulation apparatus for a hybrid vehicle having a forced induction combustion engine and an electric drive motor, the apparatus comprising: a temperature regulating circuit carrying a fluid coolant; a heat exchanger for cooling the coolant; and a first coolant pump for circulating the coolant around the temperature regulating circuit; the temperature regulating circuit having: a first branch serving a charge air cooler of a forced induction combustion engine; and a second branch serving one or more electric drive components and including a second coolant pump for regulating the flow of the coolant through the one or more electric drive components; wherein the first and second branches of the temperature regulating circuit are arranged in parallel and the first coolant pump is arranged between the heat exchanger and the first and second branches of the temperature regulating circuit so as to be operable to circulate coolant from each of the first and second branches of the temperature regulating circuit through the heat exchanger.

The first coolant pump may be is located such that, in use, coolant flowing out of the second branch of the temperature regulating circuit passes through the heat exchanger before the charge air cooler.

The first and second coolant pumps may be configured such that the second coolant pump is operable to circulate coolant through the first coolant pump and heat exchanger when the first coolant pump is not powered or idle.

The first coolant pump may be a hydrodynamic pump. The first coolant pump may be configured to permit substantially unimpeded flow of coolant through the pump when the pump is not powered and/or idle.

The first branch of the temperature regulating circuit may comprise a one-way valve. The valve may be configured to, in use when the first coolant pump is not powered, prevent the second coolant pump circulating fluid through the charge air cooler contrary to the direction of flow imposed by the first coolant pump when the first coolant pump is powered.

The first coolant pump may be driven (e.g. mechanically) from the forced induction combustion engine served by the charge air cooler. The first coolant pump may be mechanically coupled to an output of the combustion engine such that the pumping strength of the first coolant pump varies in dependence on the speed of the combustion engine.

The one or more electric drive components may include one or more of an electric drive motor, a battery, control electronics for the electric drive motor (e.g. an inverter), and a DC-DC converter.

The one or more electric drive components may be in series with the second coolant pump and each other.

The combustion engine and an electric drive motor to which the electric drive components relate may be operable to provide drive for a hybrid vehicle. The vehicle may have a hybrid mode in which at least the combustion engine is arranged to provide drive for the hybrid vehicle. The vehicle may have an electric drive mode in which only the electric drive motor is arranged to provide drive for the hybrid vehicle. The temperature regulation apparatus may further comprise a control unit configured to, in hybrid mode, control the pumping strength of the second coolant pump in dependence on a measure of the pumping strength of the first coolant pump and a measure of temperature of one or more of the one or more electric drive components.

The first coolant pump may be mechanically driven from the combustion engine. The measure of the pumping strength of the first coolant pump may be a measure of the speed of the combustion engine.

The control unit maybe configured to, in a hybrid drive mode, control the pumping strength of the second coolant pump by: forming a measure of cooling demand for each of the one or more electric drive components from the measure of temperature of each of the one or more electric drive components; estimating a target flow rate through the second branch of the temperature regulating circuit from the one or more measures of cooling demand; and determining a pumping strength of the second coolant pump from the target flow rate and the pumping strength of the first coolant pump.

The one or more electric drive components may comprise an electric drive motor. The motor may be capable of providing motive drive to a vehicle. The control unit may be further configured to, in the hybrid drive mode, control the pumping strength of the second coolant pump in dependence on a measure of electric drive motor power, the measure of electric drive motor power being used by the control unit in the formation of the measure of cooling demand for the electric drive motor.

The one or more electric drive components may comprise the electric drive motor. The control unit may be configured to, in an electric drive mode, control the pumping strength of the second coolant pump in dependence on a measure of temperature of one or more of the one or more electric drive components and a measure of electric drive motor speed.

In use, the first coolant pump may be not powered in electric drive mode.

The control unit may be configured to control the pumping strength of the second coolant pump by controlling the speed of the second coolant pump.

The control unit may be configured to generate from a temperature of each of the one or more electric drive components an overall measure of thermal stress of the electric drive components for provision to a driver of the hybrid vehicle.

The second cooling branch may serve a plurality of electric drive components, including at least an electric drive motor and a battery for the electric drive motor, and the temperature regulating circuit may further comprise a bypass connection operable to direct coolant on a path bypassing the heat exchanger, wherein the apparatus is operable in two modes:
in a warming mode in which the bypass connection is switched into the temperature regulating circuit so as to, in use, cause coolant flowing through the electric drive components to substantially bypass the heat exchanger; and
in a cooling mode in which, in use, coolant flowing through the electric drive components passes through the heat exchanger and not substantially through the bypass connection.

The switchable bypass connection may be controlled by means of a thermostat arranged on the temperature regulating circuit such that, in use, the bypass connection is switched into the temperature regulating circuit when the coolant flowing through the electric drive components is below a predetermined temperature.

The thermostat may be a mechanical thermostat.

The electric drive components and second coolant pump may be arranged in series on the temperature regulating circuit.

The electric drive components may further comprise one or more of an inverter, control electronics for the electric drive motor, and a DC-DC converter.

The electric drive motor may be a power source for a hybrid vehicle.

The bypass connection may be controlled by means of a thermostat configured to, in the warming mode, substantially prevent the first coolant pump circulating coolant through the first branch of the temperature regulating circuit.

### DESCRIPTION OF THE DRAWINGS

The present invention will now be described by way of example with reference to the accompanying drawings, in which:

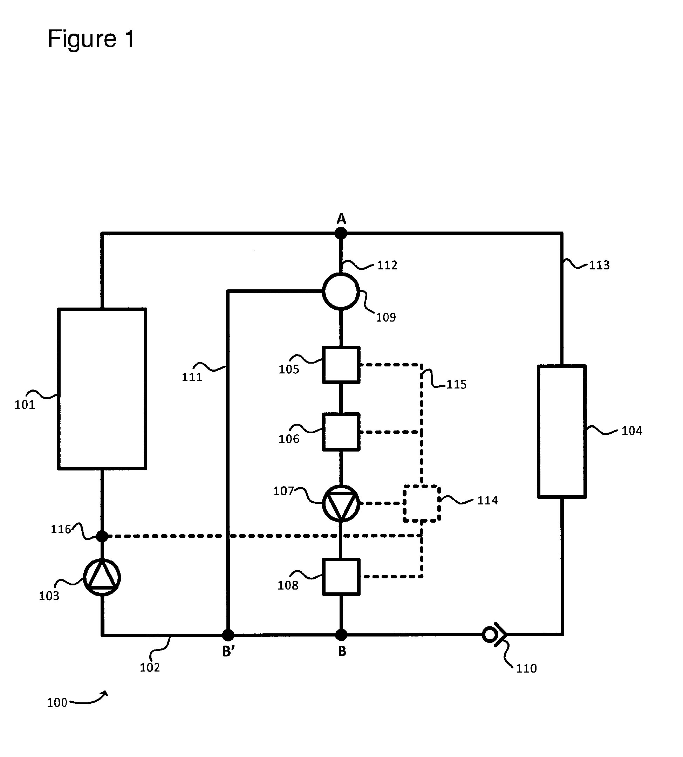

Figure 1 is a schematic diagram of temperature regulation apparatus configured in accordance with the present invention.

### DETAILED DESCRIPTION OF THE DRAWINGS

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to temperature regulation apparatus for electric and hybrid vehicles, and is particularly advantageous when used in a high performance parallel hybrid vehicle. More generally the temperature regulation apparatus can be utilised in a hybrid having any kind of powertrain configuration, including hybrid vehicles having both series and parallel powertrain configurations.

Figure 1 shows a schematic diagram of cooling apparatus for a hybrid vehicle having an electric drive motor and a forced air internal combustion engine having a charge air cooler. The forced air engine has compression apparatus such as a supercharger or a turbocharger (not shown) which delivers charge/intake air to the combustion chamber(s) of the engine at greater than atmospheric pressure. The charge air cooler is located in the intake path between the compression apparatus and the combustion chambers and is arranged to cool the compressed air.

Cooling apparatus 100 comprises a cooling circuit 102 around which a fluid coolant circulates so as to convey heat generated by components served by the cooling circuit to a heat exchanger 101. The heat exchanger would typically be an air cooled radiator arranged to dump heat in the coolant into the environment, but more generally could be any kind of heat exchanger for transferring heat energy from the coolant to the environment or a second system. The coolant could be a liquid such as water or oil.

The cooling circuit 102 comprises two parallel branches: an engine branch 113 which serves coolant to a charge air cooler 104 of the forced air engine, and a hybrid branch 112 which serves coolant to electric drive components 105, 106 and 108. Coolant can be pumped around the two branches of the cooling circuit by a primary coolant pump 103 which can be located at any point on the circuit between heat exchanger 101 and the ends of the hybrid branch (indicated by points A and point B in the figure, or points A and B' if the bypass link 111 described below is provided). This is because it is advantageous that coolant passing out of the hybrid branch 112 passes through the heat exchanger before the charge air cooler. This ensures that in the electric drive mode described below in which pump 103 is not powered, coolant from the hybrid branch circulates in the same sense as in hybrid drive mode.

Hybrid branch 112 is provided with a secondary coolant pump 107 which is arranged so as to be able to pump coolant through the electric drive components 105, 106 and 108. Preferably the electric drive components and pump 107 are in series, but one or more of the electric drive components could be provided on parallel loops served by the secondary pump. Pump 107 can be provided anywhere on the hybrid branch, including between any of the components to be cooled. In the case that a bypass connection is employed in the manner described below, pump 107 can be located after fluid switch 109 (in terms of the direction of coolant flow) on the hybrid branch.

In figure 1, component 105 is a battery for the electric drive motor of the hybrid vehicle, component 106 is a motor control unit for the electric drive motor of the hybrid vehicle, and component 108 is the electric drive motor of the hybrid vehicle. More generally, the electric drive components could be any components relating to the electric drive system of a hybrid vehicle. Motor control unit 106 would typically include control electronics for the electric drive motor (such as an inverter) as appropriate to the type of electric drive motor, as well as other components such as a DC-DC converter,. Alternatively components such as a DC-DC converter could be provided as a separate component for cooling.

In general, the electric drive components could be provided for cooling in any combination, with one or more heat exchangers (not shown) coupling one or more of the electric drive components to the cooling circuit. The hybrid branch could be arranged to provide cooling to any number and type of components relating to the electric drive of the vehicle.

Advantageous aspects of the cooling circuit arrangement shown in figure 1 will now be described with respect to the modes of operation of a hybrid vehicle at which the cooling circuit is utilised.

Firstly, consider a hybrid drive mode of the hybrid vehicle in which at least the combustion engine is arranged to provide drive for the vehicle. For example, in the case of a parallel hybrid, the combustion engine provides drive for the vehicle, assisted as appropriate by the electric drive motor. And in the example case of a series hybrid, the combustion engine provides drive for the vehicle by generating electrical energy to drive the electric drive motor. In the case of a series hybrid, the vehicle would include an electric generator, which would preferably also be cooled by hybrid branch 112.

In hybrid drive mode, primary pump 103 is powered and drives coolant around the cooling circuit, including through the charge air cooler on engine branch 113. This is important because the combustion engine of the hybrid vehicle is a forced air engine having a charge air cooler for cooling the compressed charge air: in hybrid mode the charge air cooler is operational and therefore generally requires some degree of cooling.

It is advantageous if pump 103 is driven through a fixed mechanical linkage to an output shaft of the combustion engine (e.g. a crankshaft or a gearbox shaft). Preferably pump 103 is a mechanical pump driven by a direct mechanical connection from an engine output, such as by means of one or more gears or a drivebelt. This naturally ensures that as the speed of the engine increases and, under load, the cooling requirements of the charge air cooler consequently increase, then the speed of the pump 103 also increases and hence the flow rate of coolant through the charge air cooler increases. This avoids the need for control systems for controlling the output of pump 103. In less preferred embodiments, pump 103 is an electric pump whose pumping strength (e.g. pump speed or stroke) is controlled in dependence on the cooling requirements of the charge air cooler.

In hybrid drive mode, pump 103 generally also causes coolant to circulate through the electric drive components on hybrid branch 112. However, in this mode the secondary pump 107 acts to regulate the underlying flow of coolant from pump 103 through the hybrid branch so as to provide an appropriate degree of cooling for the hybrid electric components. It is therefore preferred that pump 107 is an electric pump so as to permit straightforward control of its pumping strength. Primary pump 103 would preferably be more powerful than secondary pump 107 such that the primary pump substantially defines the flow rate around the cooling circuit and the secondary pump acts to modulate the particular flow rate through the hybrid branch by boosting or retarding the coolant flow generated by the primary pump. Pump 107 should however be sufficiently powerful to provide the required coolant flow rate in the electric drive modes described below.

By increasing or decreasing the pumping strength of pump 107, the flow of coolant through the electric drive components 105, 106 and 108 can be controlled and hence the degree of cooling those components receive. For example, for a given flow rate generated by pump 103 (due, say, to a given engine speed), pump 107 can increase the flow rate through the hybrid branch in particular by increasing the speed of pump 107; similarly, pump 107 can decrease the flow rate through the hybrid branch in particular by decreasing the speed of pump 107.

Thus, in a hybrid mode when (at least at times) both the combustion engine and electric drive motor provide drive, the cooling circuit architecture of the present invention allows a single cooling circuit to provide an appropriate level of cooling to both a charge air cooler and hybrid electric components.

Secondly, we consider an electric drive mode of the hybrid vehicle in which the electric drive motor is arranged to provide drive for the vehicle but not the combustion engine. For example, in the case of a parallel hybrid, the combustion engine can be off or idling, leaving vehicle drive to the electric drive motor. And in the example case of a series hybrid, the combustion engine can be off or idling, with electrical energy for the electric drive motor being provided from battery 105.

In electric drive mode, pump 103 is not powered or maintains only a minimal flow of coolant around the circuit. In preferred embodiments of the present invention in which pump 103 is mechanically driven by the engine, this is due to the engine being off or idling. In such a drive mode, the charge air cooler does not require cooling since it does not cool (or cools at only a minimal level) the charge air of the engine and therefore does not develop significant heat. Cooling of the electric drive components (which typically would generate significant amounts of heat in electric drive mode) is required however. This cooling requirement is satisfied by pump 107 which in electric drive mode at least substantially provides the pumping force for circulating the coolant around the cooling circuit.

It is advantageous if a one-way valve 110 is provided on engine branch 113 in order to prevent the action of pump 107 forcing coolant through the charge air cooler in the opposite sense to that of hybrid drive mode. This further ensures that the power requirements of the electric pump are not excessive since it need only pump coolant through the hybrid branch and heat exchanger 101.

Pump 103 is preferably a hydrodynamic pump so as to avoid the primary pump substantially impeding the flow of coolant generated by secondary pump 107 when the primary pump is not powered or idling. Thus pump 103 may permit the flow of coolant through it when it is not itself pumping. For example, pump 103 could be a centrifugal pump having a radial flow impeller. In less preferred embodiments, pump 103 could be provided with a bypass valve or link (not shown in figure 1) that is activated when the primary pump is not powered or idling so as to allow pump 107 to drive fluid through the bypass valve or link and into the heat exchanger.

In certain hybrid configurations, it might also be possible for the vehicle to be driven in an engine only drive mode in which the electric drive motor is disabled or not used to provide drive. Pump 107 would preferably be similarly disabled or not powered. It can be further advantageous in such a mode to prevent flow through the hybrid branch so as to avoid unnecessary cooling of the electric drive components. This could be achieved by means of a suitable valve, or through the use of a locking mechanism on pump 107 arranged to prevent or substantially impede flow through the hybrid branch.

A suitable control system for controlling secondary pump 107 so as to achieve the above behaviour in the hybrid and electric drive modes of a hybrid vehicle will now be described.

Cooling apparatus 100 further comprises a control unit 114 configured to control the pumping strength (typically pump speed) of pump 107 in dependence on one or more inputs 115 as appropriate to the drive mode. The control unit could be provided at an engine management unit or other electronic control system of a vehicle. In hybrid mode, the control unit is configured to control the pumping strength of the second coolant pump in dependence on the pumping strength of the first coolant pump (which could for example be measured by a flow rate sensor 116 or from engine speed if the pump is mechanically coupled to the engine) and the temperatures of the one or more electric drive components. In preferred embodiments in which pump 103 is mechanically driven by the engine, the pumping strength of pump 103 can be inferred from engine speed, which is a parameter typically available to an engine management unit of a vehicle.

The control unit can be configured to control the pumping strength of the second coolant pump in hybrid mode by identifying the cooling demand of the electric drive components and hence estimate a target flow rate required to achieve appropriate cooling of those components. In preferred embodiments, the cooling requirement of charge air cooler 104 need not be taken into account because pump 103 naturally varies the coolant flow rate through the charge air cooler in hybrid mode.

For example, the control unit can determine the appropriate pumping strength of pump 107 by the following mechanism:
inferring the cooling demand of each of the electric drive components from the temperature of each of the electric drive components, the cooling demand being calculated from a measure of the deviation represented by each component temperature from a target temperature;
estimating a target flow rate for the hybrid branch by scaling each of the measures of cooling demand by a respective component scaling parameter (e.g. to weight components by their sensitivity to temperature and/or their relative heat output) and combining said cooling demands according to a predetermined algorithm so as to form an indication of the expected flow rate required to achieve appropriate cooling of the electric drive components; and
determining a pumping strength of pump 107 (e.g. a pump speed) from the target flow rate taking into account the contribution to the coolant flow rate provided by pump 103 (e.g. as inferred from the engine speed for a mechanically driven pump 103).

The heat developed in the electric drive components substantially depends on the activity of the electric drive motor. For example, under hard acceleration, the electric drive motor 108, the battery 105 providing electrical power to the motor, and the inverter 106 would typically generate significant amounts of heat. Similarly, under hard braking in a hybrid vehicle employing a kinetic energy recovery system, the electric drive motor, the battery and the inverter/DC-DC converter would in many hybrid vehicles generate significant amounts of heat due to the motor being used as a generator to provide electrical energy back to the battery. It is therefore advantageous to further arrange that the control unit calculate the desired pumping strength of pump 107 in dependence on a measure of the electric drive motor power.

In electric drive mode, the control unit can determine the appropriate pumping strength of pump 107 in dependence on the temperature of the electric drive components and the electric drive motor power. As for hybrid drive mode, the control unit is again preferably configured to estimate a target flow rate from the cooling demand of each of the electric drive components. The control unit need not concern itself with the contribution made by pump 103 to coolant flow rate since that pump is off or idle.

The cooling demands formed by the control unit for the electric drive components can provide a useful indication of the thermal stress of the hybrid drive. The cooling demands can be combined, for example, by scaling each of the cooling demands by the respective component scaling parameter so as to form a normalised indicator of the overall thermal stress in the electric drive components. Such a thermal stress indicator can be a useful indicator for the driver.

According to a second aspect of the present invention, cooling system 100 is further provided with a bypass connection 111 which can be switched into the cooling circuit by fluid switch 109 arranged on the hybrid branch of the cooling circuit so as to cause the flow of coolant through the electric drive components to bypass the heat exchanger. This enables the cooling circuit to warm battery 105 when the temperature of the coolant is below the optimum working temperature band of the battery. Lithium ion batteries in particular have a narrow temperature band in which they operate at their optimum level, typically between -10 and +40 °C. Outside of the optimum temperature band, the performance of such batteries degrades rapidly.

When bypass connection 111 is switched into the circuit, coolant driven through the electric drive components by pump 107 is pulled from the cooling circuit at point B', before the heat exchanger. This enables the battery to be warmed from the thermal losses generated by the electric drive components. For example, motor control unit 106, the electric motor 108 and the battery itself 105 all generate heat as a byproduct of their normal operation. The use of the bypass connection allows that heat to be used to warm the battery in an essentially closed loop system. This avoids the need for any active heating systems to warm the battery and hence avoids the added weight, cost and complexity introduced by such heating systems. In order to avoid increased complexity of the control systems, it is advantageous if the fluid switch 109 is a mechanical thermostat activated to switch in the bypass connection when the temperature of the thermostat drops below a predetermined setpoint (or, equivalently, to close off the bypass connection when the temperature of the thermostat increases above that predetermined setpoint).

In order to avoid pump 107 from pulling coolant through the heat exchanger, fluid switch 109 preferably substantially isolates the hybrid branch from the output side of the heat exchanger (point A in figure 1) when it switches in the bypass connection. Depending on the configuration of the cooling circuit, some residual amount of coolant may pass through the heat exchanger but the fluid switch is configured such that coolant substantially passes around the closed loop formed by the bypass connection.

When the engine could be operational and pump 103 powered, there can be some mixing of coolant from the charge air cooler and from the hybrid components between points B and B' on the cooling circuit. Generally such mixing will aid the warming of the coolant passing through the hybrid components since the charge air cooler will often be generating heat. However, the bypass connection is useful for any vehicle having an electric drive, including vehicles that do not have a charge air cooler (and perhaps do not have a combustion engine at all) and therefore do not have engine branch 113.

It is particularly advantageous if the electric drive components are arranged on the hybrid branch in the order of their sensitivity to temperature, as shown in figure 1. The battery 105 is located before the motor control unit 106 which is located before the electric motor 108 (in terms of the direction of coolant flow). This ensures that the most sensitive components are protected from extremes of temperature, and that the battery is the first to receive coolant from the heat exchanger. Preferably the pump 107 is located between the motor control unit and electric drive motor.

It is envisaged that there could be more than one primary pump 103 and/or more than one secondary pump 107 provided on a cooling circuit and configured in accordance with the teachings set out herein.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

The present invention is further described in Annex A. The numbered paragraphs of the Annex describe the present invention in terms of exemplary combinations of features.

### ANNEX A

1. Temperature regulation apparatus for a hybrid vehicle having a forced induction combustion engine and an electric drive motor, the apparatus comprising:
   a temperature regulating circuit carrying a fluid coolant;
   a heat exchanger for cooling the coolant; and
   a first coolant pump for circulating the coolant around the temperature regulating circuit;
   the temperature regulating circuit having:
   a first branch serving a charge air cooler of a forced induction combustion engine; and
   a second branch serving one or more electric drive components and including a second coolant pump for regulating the flow of the coolant through the one or more electric drive components;
   wherein the first and second branches of the temperature regulating circuit are arranged in parallel and the first coolant pump is arranged between the heat exchanger and the first and second branches of the temperature regulating circuit so as to be operable to circulate coolant from each of the first and second branches of the temperature regulating circuit through the heat exchanger.
2. Temperature regulation as in paragraph 1, wherein the first coolant pump is located such that, in use, coolant flowing out of the second branch of the temperature regulating circuit passes through the heat exchanger before the charge air cooler.
3. Temperature regulation apparatus as in paragraph 1 or 2, wherein the first and second coolant pumps are configured such that the second coolant pump is operable to circulate coolant through the first coolant pump and heat exchanger when the first coolant pump is not powered or idle.
4. Temperature regulation apparatus as in any preceding paragraph, wherein the first coolant pump is a hydrodynamic pump configured to permit substantially unimpeded flow of coolant through the pump when the pump is not powered or idle.
5. Temperature regulation apparatus as in any preceding paragraph, wherein the first branch of the temperature regulating circuit further comprises a one-way valve configured to, in use when the first coolant pump is not powered, prevent the second coolant pump circulating fluid through the charge air cooler contrary to the direction of flow imposed by the first coolant pump when the first coolant pump is powered.
6. Temperature regulation apparatus as in any preceding paragraph, wherein the first coolant pump is driven from the forced induction combustion engine served by the charge air cooler.
7. Temperature regulation apparatus as in paragraph 6, wherein the first coolant pump is mechanically coupled to an output of the combustion engine such that the pumping strength of the first coolant pump varies in dependence on the speed of the combustion engine.
8. Temperature regulation apparatus as in any preceding paragraph, wherein the one or more electric drive components include one or more of an electric drive motor, a battery, control electronics for the electric drive motor (inverter), and a DC-DC converter.
9. Temperature regulation apparatus as in any preceding paragraph, wherein the one or more electric drive components are in series with the second coolant pump and each other.
10. Temperature regulation apparatus as in any preceding paragraph, wherein the combustion engine and an electric drive motor to which the electric drive components relate are operable to provide drive for a hybrid vehicle having:
   a hybrid mode in which at least the combustion engine is arranged to provide drive for the hybrid vehicle; and
   an electric drive mode in which only the electric drive motor is arranged to provide drive for the hybrid vehicle;
   the temperature regulation apparatus further comprising a control unit configured to, in hybrid mode, control the pumping strength of the second coolant pump in dependence on a measure of the pumping strength of the first coolant pump and a measure of temperature of one or more of the one or more electric drive components.
11. Temperature regulation apparatus as in paragraph 10, wherein the first coolant pump is mechanically driven from the combustion engine and the measure of the pumping strength of the first coolant pump is a measure of the speed of the combustion engine.
12. Temperature regulation apparatus as in paragraph 10 or 11, wherein the control unit is configured to, in a hybrid drive mode, control the pumping strength of the second coolant pump by:
   forming a measure of cooling demand for each of the one or more electric drive components from the measure of temperature of each of the one or more electric drive components;
   estimating a target flow rate through the second branch of the temperature regulating circuit from the one or more measures of cooling demand; and
   determining a pumping strength of the second coolant pump from the target flow rate and the pumping strength of the first coolant pump.
13. Temperature regulation apparatus as in paragraph 12, wherein the one or more electric drive components comprise an electric drive motor and the control unit is further configured to, in the hybrid drive mode, control the pumping strength of the second coolant pump in dependence on a measure of electric drive motor power, the measure of electric drive motor power being used by the control unit in the formation of the measure of cooling demand for the electric drive motor.
14. Temperature regulation apparatus as in any preceding paragraph, wherein the one or more electric drive components comprise the electric drive motor and the control unit is configured to, in an electric drive mode, control the pumping strength of the second coolant pump in dependence on a measure of temperature of one or more of the one or more electric drive components and a measure of electric drive motor speed.
15. Temperature regulation apparatus as in paragraph 14, wherein, in use, the first coolant pump is not powered in electric drive mode.
16. Temperature regulation apparatus as in any of paragraphs 10 to 15, wherein the control unit is configured to control the pumping strength of the second coolant pump by controlling the speed of the second coolant pump.
17. Temperature regulation apparatus as in any of paragraphs 10 to 16, wherein the control unit is configured to generate from a temperature of each of the one or more electric drive components an overall measure of thermal stress of the electric drive components for provision to a driver of the hybrid vehicle.
18. Temperature regulation apparatus for a vehicle having an electric drive motor, the apparatus comprising:
   a temperature regulating circuit carrying a fluid coolant and serving a plurality of electric drive components, including at least an electric drive motor and a battery for the electric drive motor;
   a heat exchanger for cooling the coolant;
   a coolant pump for circulating the coolant around the temperature regulating circuit; and
   a bypass connection operable to direct coolant on a path bypassing the heat exchanger;
   wherein the apparatus is operable in two modes:
   in a warming mode in which the bypass connection is switched into the temperature regulating circuit so as to, in use, cause coolant flowing through the electric drive components to substantially bypass the heat exchanger; and
   in a cooling mode in which, in use, coolant flowing through the electric drive components passes through the heat exchanger and not substantially through the bypass connection.
19. Temperature regulation apparatus as in paragraph 18, wherein the switchable bypass connection is controlled by means of a thermostat arranged on the temperature regulating circuit such that, in use, the bypass connection is switched into the temperature regulating circuit when the coolant flowing through the electric drive components is below a predetermined temperature.
20. Temperature regulation apparatus as in paragraph 19, wherein the thermostat is a mechanical thermostat.
21. Temperature regulation apparatus as in any of paragraphs 18 to 20, wherein the electric drive components and coolant pump are arranged in series on the temperature regulating circuit.
22. Temperature regulation apparatus as in any of paragraphs 18 to 21, wherein the electric drive components further comprise one or more of an inverter, control electronics for the electric drive motor, and a DC-DC converter.
23. Temperature regulation apparatus as in any of paragraphs 18 to 22, wherein the electric drive motor is a power source for a hybrid vehicle.
24. A hybrid vehicle comprising a forced induction combustion engine, an electric drive motor, and temperature regulation apparatus configured in accordance with paragraphs 1 and 18.
25. A hybrid vehicle as in paragraph 24, wherein the bypass connection is controlled by means of a thermostat configured to, in the warming mode, substantially prevent the first coolant pump circulating coolant through the first branch of the temperature regulating circuit.

## Claims

1. Temperature regulation apparatus for a hybrid vehicle having a forced induction combustion engine and an electric drive motor, the apparatus comprising:
a temperature regulating circuit carrying a fluid coolant;
a heat exchanger for cooling the coolant; and
a first coolant pump for circulating the coolant around the temperature regulating circuit;
the temperature regulating circuit having:
a first branch serving a charge air cooler of a forced induction combustion engine; and
a second branch serving one or more electric drive components and including a second coolant pump for regulating the flow of the coolant through the one or more electric drive components;
wherein the first and second branches of the temperature regulating circuit are arranged in parallel and the first coolant pump is arranged between the heat exchanger and the first and second branches of the temperature regulating circuit so as to be operable to circulate coolant from each of the first and second branches of the temperature regulating circuit through the heat exchanger.

2. Temperature regulation apparatus as claimed in claim 1, wherein the first coolant pump is located such that, in use, coolant flowing out of the second branch of the temperature regulating circuit passes through the heat exchanger before the charge air cooler.

3. Temperature regulation apparatus as claimed in claim 1 or 2, wherein the first and second coolant pumps are configured such that the second coolant pump is operable to circulate coolant through the first coolant pump and heat exchanger when the first coolant pump is not powered or idle.

4. Temperature regulation apparatus as claimed in any preceding claim, wherein the first coolant pump is a hydrodynamic pump configured to permit substantially unimpeded flow of coolant through the pump when the pump is not powered or idle.

5. Temperature regulation apparatus as claimed in any preceding claim, wherein the first branch of the temperature regulating circuit further comprises a one-way valve configured to, in use when the first coolant pump is not powered, prevent the second coolant pump circulating fluid through the charge air cooler contrary to the direction of flow imposed by the first coolant pump when the first coolant pump is powered.

6. Temperature regulation apparatus as claimed in claim 5, wherein the first coolant pump is mechanically coupled to an output of the combustion engine such that the pumping strength of the first coolant pump varies in dependence on the speed of the combustion engine.

7. Temperature regulation apparatus as claimed in any preceding claim, wherein the one or more electric drive components are in series with the second coolant pump and each other.

8. Temperature regulation apparatus as claimed in any preceding claim, wherein the combustion engine and an electric drive motor to which the electric drive components relate are operable to provide drive for a hybrid vehicle having:
a hybrid mode in which at least the combustion engine is arranged to provide drive for the hybrid vehicle; and
an electric drive mode in which only the electric drive motor is arranged to provide drive for the hybrid vehicle;
the temperature regulation apparatus further comprising a control unit configured to, in hybrid mode, control the pumping strength of the second coolant pump in dependence on a measure of the pumping strength of the first coolant pump and a measure of temperature of one or more of the one or more electric drive components.

9. Temperature regulation apparatus as claimed in claim 8, wherein the control unit is configured to, in a hybrid drive mode, control the pumping strength of the second coolant pump by:
forming a measure of cooling demand for each of the one or more electric drive components from the measure of temperature of each of the one or more electric drive components;
estimating a target flow rate through the second branch of the temperature regulating circuit from the one or more measures of cooling demand; and
determining a pumping strength of the second coolant pump from the target flow rate and the pumping strength of the first coolant pump.

10. Temperature regulation apparatus as claimed in claim 9, wherein the one or more electric drive components comprise an electric drive motor and the control unit is further configured to, in the hybrid drive mode, control the pumping strength of the second coolant pump in dependence on a measure of electric drive motor power, the measure of electric drive motor power being used by the control unit in the formation of the measure of cooling demand for the electric drive motor.

11. Temperature regulation apparatus as claimed in any preceding claim, wherein the one or more electric drive components comprise the electric drive motor and the control unit is configured to, in an electric drive mode, control the pumping strength of the second coolant pump in dependence on a measure of temperature of one or more of the one or more electric drive components and a measure of electric drive motor speed.

12. Temperature regulation apparatus as claimed in claim 11, wherein, in use, the first coolant pump is not powered in electric drive mode.

13. Temperature regulation apparatus for a vehicle as claimed in any preceding claim, the second cooling branch serving a plurality of electric drive components, including at least an electric drive motor and a battery for the electric drive motor, and the temperature regulating circuit further comprising a bypass connection operable to direct coolant on a path bypassing the heat exchanger, wherein the apparatus is operable in two modes:
in a warming mode in which the bypass connection is switched into the temperature regulating circuit so as to, in use, cause coolant flowing through the electric drive components to substantially bypass the heat exchanger; and
in a cooling mode in which, in use, coolant flowing through the electric drive components passes through the heat exchanger and not substantially through the bypass connection.

14. Temperature regulation apparatus as claimed in claim 13, wherein the switchable bypass connection is controlled by means of a thermostat arranged on the temperature regulating circuit such that, in use, the bypass connection is switched into the temperature regulating circuit when the coolant flowing through the electric drive components is below a predetermined temperature.

15. Temperature regulation apparatus as claimed in claim 13 or 14, wherein the bypass connection is controlled by means of a thermostat configured to, in the warming mode, substantially prevent the first coolant pump circulating coolant through the first branch of the temperature regulating circuit.
